# EUROPÄISCHE PATENTSCHRIFT

(11) **EP 0 780 593 B1**
(45) Veröffentlichungstag und Bekanntmachung des Hinweises auf die Patenterteilung: **05.04.2000**
(21) Anmeldenummer: 96890177.7
(22) Anmeldetag: 27.11.1996
(51) Int. Cl.: F16F 15/26, F02B 75/06, F01M 9/10

(54) **Kurbeltrieb für einen Verbrennungsmotor**
Crank drive mechanism for internal combustion engine
Vilebrequin pour moteur à combustion interne

(30) Priorität: 22.12.1995 AT 209395
(43) Veröffentlichungstag der Anmeldung: 25.06.1997
(73) Patentinhaber: Bombardier-Rotax Gesellschaft m.b.H., A-4623 Gunskirchen (AT)
(72) Erfinder: Bostelmann, Willy, Ing., 4600 Wels (AT); Holweg, Claus, Ing., 8850 Murau (AT)
(74) Vertreter: Hübscher, Heiner, Dipl.-Ing.

(56) Entgegenhaltungen:
- DE-A- 3 119 362
- FR-A- 2 378 179
- US-A- 3 800 625
- US-A- 4 703 724
- US-A- 4 974 561

## Beschreibung

Die Erfindung bezieht sich auf einen Kurbeltrieb für einen Verbrennungsmotor mit wenigstens einem Zylinder mit einem Zylinderkopf sowie einem Kurbelgehäuse mit einer Kurbelwelle und mit einer zur Kurbelwelle parallelen, gegengleich umlaufenden Ausgleichswelle, die wie die Kurbelwelle Ausgleichsgewichte für den Massenausgleich erster Ordnung trägt, wobei zum Ausgleich des sich bezüglich der Kurbelwelle ergebenden Restmomentes der Ausgleichswelle eine zusätzliche, zur Kurbelwelle gleichlaufende, parallele Hilfswelle mit einem Gegengewicht vorgesehen ist. Ein derartiger Kurbeltrieb ist aus der US-A-3 800 625 bekannt.

Um nicht nur die umlaufenden Massenkräfte eines Kurbeltriebes ausgleichen, sondern auch dessen hin- und hergehende Massenkräfte berücksichtigen zu können, ist es bekannt, im Kurbelgehäuse eine zur Kurbelwelle parallele und zu ihr gegensinnig umlaufende Ausgleichswelle vorzusehen, deren Ausgleichsgewichte mit denen der Kurbelwelle eine resultierende Kraft erzeugen, die den hin- und hergehenden Massenkräften des Kurbeltriebes entspricht, diesen aber entgegengerichtet ist. Trotz dieser Ausgleichswelle können bei schnell laufenden Verbrennungsmotoren, wie sie beispielsweise für Motorräder eingesetzt werden, Vibrationen auftreten, die ein tolerierbares Maß übersteigen und einen erheblichen Anteil an Schwingungen erster Ordnung aufweisen.

Der Erfindung liegt somit die Aufgabe zugrunde, einen Kurbeltrieb der eingangs geschilderten Art so auszugestalten, daß der Schwingungsanteil erster Ordnung mit vergleichsweise einfachen konstruktiven Maßnahmen unterdrückt werden kann.

Die Erfindung löst die gestellte Aufgabe durch die Merkmale des Anspruchs 1.

Wegen des aus konstruktiven Gründen notwendigen Abstandes der Ausgleichswelle von der Kurbelwelle bedingen die Ausgleichsgewichte dieser Ausgleichswelle ein Restmoment um die Kurbelwelle, das für eine entsprechende Schwingungsanregung insbesondere bei höheren Drehzahlen sorgt. Durch ein Gegengewicht einer zusätzlichen, ebenfalls parallel zur Kurbelwelle angeordneten Hilfswelle kann nun ein das Restmoment der Ausgleichswelle im Kurbelgehäuse aufhebendes Gegenmoment erzeugt werden, wenn dieses Gegengewicht gegensinnig zur Ausgleichswelle, also gleichsinnig mit der Kurbelwelle umläuft. Obwohl mit Hilfe des Gegengewichtes der Hilfswelle die Drehmomente um die Kurbelwelle ausgeglichen werden können, muß die durch dieses Gegengewicht erhaltene Zusatzmasse bei einem Massenausgleich erster Ordnung berücksichtigt werden, und zwar so, daß durch den hiefür erforderliche Ausgleich keine zusätzlichen Massenkräfte auftreten. Dies bedeutet, daß der Massenausgleich koaxial zur Kurbelwell wirksam werden muß, was in sehr einfacher Weise dadurch sichergestellt werden kann, daß die Kurbelwelle selbst diesen Massenausgleich bildet. so daß ein vollkommener Massenausgleich erster Ordnung für den Kurbeltrieb mit dem Vorteil einer weitgehenden Vibrationsunterdrückung erzielt werden kann. Dem durch das Kräftepaar der Ausgleichswelle und der Kurbelwelle bedingten Moment wirkt somigt das durch das Kräftepaar der Hilfswelle und der Kurbelwelle verursachten Drehmoment entgegen.

Da es lediglich darum geht, dem Restmoment der Ausgleichswelle ein entsprechendes Gegenmoment entgegenzusetzen, kann die Lage der das Gegengewicht tragenden Hilfswelle unabhängig von der Lage der Ausgleichswelle gewählt werden. So ist es beispielsweise in weiterer Ausbildung der Erfindung möglich, die Hilfswelle auf dem Zylinderkopf, vorzugsweise in dem die Nockenwellen aufnehmenden Zylinderkopfraum, zu lagern und über den Nockenwellenantrieb anzutreiben. Durch diese Maßnahme wird ein vergleichsweise großer Abstand zwischen der Kurbelwelle und der Hilfswelle mit dem Vorteil erreicht, daß aufgrund dieses großen Abstandes das Gegengewicht für ein bestimmtes Drehmoment um die Kurbelwelle klein gehalten werden kann. Außerdem ergibt sich eine gedrängte Bauweise mit einem einfachen Antrieb für die Hilfswelle, der ja lediglich von dem ohnehin vorhandenen Nockenwellenantrieb abgeleitet zu werden braucht.

Die Lagerung der Hilfswelle auf dem Zylinderkopf eröffnet außerdem die Möglichkeit, den die Hilfswelle aufnehmenden, im allgemeinen geschlossenen Zylinderkopfraum zu belüften, ohne einen Ölaustritt befürchten zu müssen. Zu diesem Zweck braucht die Hilfswelle lediglich mit einer axialen, außerhalb des Zylinderkopfraumes mündenden Sackbohrung versehen zu werden, von der vorzugsweise im Bereich des Gegengewichtes wenigstens eine im Zylinderkopfraum mündende Querbohrung ausgeht. Da das Öl nicht entgegen der Fliehkraft in die radiale Bohrung eindringen kann, wird trotz eines möglichen Luftaustausches eine einfache Ölsperre erhalten.

In der Zeichnung ist der Erfindungsgegenstand beispielsweise dargestellt. Es zeigen
- Fig. 1: einen erfindungsgemäßen Kurbeltrieb in einem schematischen Schnitt durch das Kurbelgehäuse und den Zylinder eines Verbrennungsmotors,

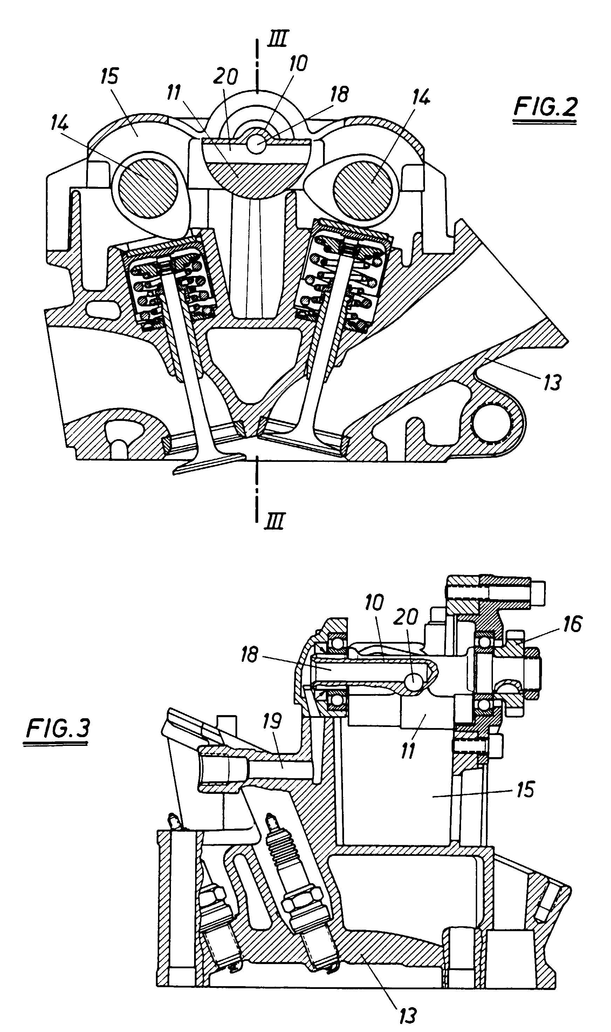

- Fig. 2: einen Schnitt durch den Zylinderkopf des Verbrennungsmotors in einem größeren Maßstab und
- Fig. 3: einen Schnitt nach der Linie III - III der Fig. 2.

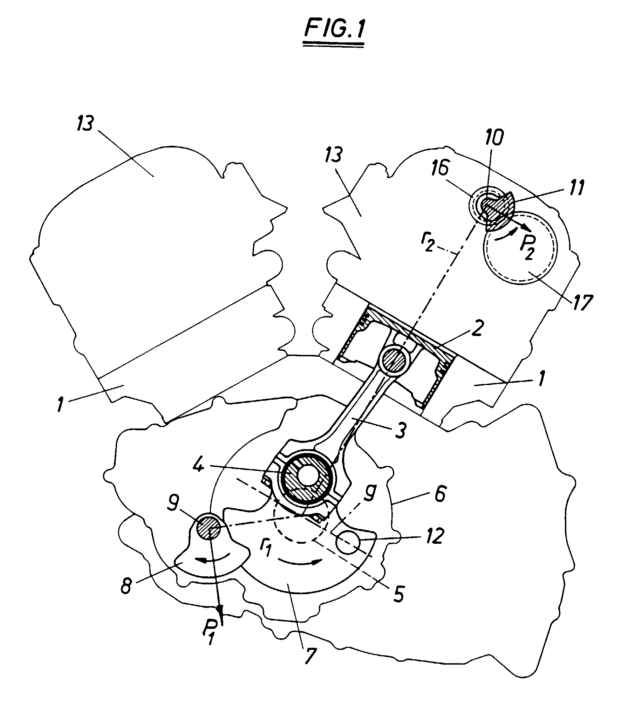

Entsprechend dem Ausführungsbeispiel nach der Fig. 1 wird der dargestellte Kurbeltrieb für ein Motorrad von einem Verbrennungsmotor mit zwei Zylindern 1 angetrieben, deren Kolben 2 über ein Pleuel 3 am Kurbelzapfen 4 einer Kurbelwelle 5 angreift, die in einem Kurbelgehäuse 6 gelagert ist. Zum Ausgleich der umlaufenden und der hin- und hergehenden Massenkräfte dieses Kurbeltriebes wirken die an den Kurbelwangen vorgesehenen Ausgleichsgewichte 7 mit Ausgleichsgewichten 8 einer ebenfalls im Kurbelgehäuse 6 gelagerten Ausgleichswelle 9 zusammen, die mit gleicher Drehzahl, aber gegensinnig zur Kurbelwelle 5 umläuft. Obwohl bei einer entsprechenden Abstimmung der Ausgleichsgewichte 7 und 8 ein weitgehender Massenausgleich erster Ordnung erreicht werden kann, kann es insbesondere bei höheren Drehzahlen zu störenden Vibrationen mit einem erheblichen Schwingungsanteil erster Ordnung aufgrund eines Restmomentes um die Kurbelwelle 4 durch die Ausgleichsgewichte 8 der Ausgleichswelle 9 kommen. Um ein diesem Restmoment entgegenwirkendes Drehmoment zu erzeugen, ist eine Hilfswelle 10 mit einem entsprechenden Gegengewicht 11 vorgesehen, das gegensinnig zur Ausgleichswelle 9 umlaufen muß. Mit diesem zusätzlichen Gegengewicht 11 kann zwar das Restmoment der Ausgleichsgewichte 8 um die Kurbelwelle 5 ausgeglichen werden, doch bedarf auch die durch dieses Gegengewicht 11 bedingte Zusatzmasse eines Ausgleiches. Zu diesem Zweck bildet die Kurbelwelle 5 das für diesen Massenausgleich erforderliche Ausgleichsgewicht, das als zusätzliche Masse auf der in bezug auf die Drehachse dem Gegengewicht 11 gegenüberliegenden Seite der Kurbelwelle 5 wirksam werden kann. Besonders vorteilhafte Bedingungen werden jedoch erzielt, wenn der Massenausgleich durch eine Verringerung der Masse der Ausgleichsgewichte 7 der Kurbelwelle 5 auf der Seite des Gegengewichtes 11 erreicht wird. Die Aussparung 12 in den Ausgleichsgewichten 7 bedingt somit einen entsprechenden Massenausgleich.

Da das Restmoment der Ausgleichsgewichte 8 der Ausgleichswelle 9 dann am größten ist, wenn die zur Ausgleichswelle 9 radialen Fliehkräfte P₁ der Ausgleichsgewichte 8 senkrecht zum Radius r₁ der durch die Kurbelwelle 5 gebildeten Drehachse stehen, muß in dieser Kurbeltriebstellung auch die Fliehkraft P₂ des Gegengewichtes 11 der Hilfswelle 10 senkrecht zu einem Radius r₂ verlaufen, wie dies in der Fig. 1 eingezeichnet ist. Der Massenausgleich für das Gegengewicht 11 muß daher mit seinem Schwerpunkt auf einer zum Radius r₂ senkrechten Geraden g liegen, und zwar auf der dem Gegengewicht 11 gegenüberliegenden Seite dieses Radius r₂. Dies bedeutet, daß die Aussparung 12 auf der Gegengewichtseite vorgesehen sein muß.

Da zum Ausgleich des Restmomentes P₁.r₁ das Gegenmoment P₂.r₂ entgegengesetzt gleich zu wählen ist, kann mit zunehmendem Abstand r₂ das Gegengewicht 11 kleiner gewählt werden. Es empfiehlt sich daher ein vergleichsweise großer Abstand r₂, der dann vorteilhaft sichergestellt werden kann, wenn die Hilfswelle 10 auf dem Zylinderkopf 13 gelagert wird, und zwar in dem die Nockenwellen 14 aufnehmenden Zylinderkopfraum 15, so daß der Antrieb für die Hilfswelle 10 von dem Nockenwellenantrieb abgeleitet werden kann. Hiefür ist auf der Hilfswelle 10 ein Zahnrad 16 angeordnet, das mit einem Zahnrad 17 des Nockenwellenantriebes kämmt.

Die Anordnung der Hilfswelle 10 im Zylinderkopfraum 13 bietet außerdem die Möglichkeit, für eine Belüftung dieses Raumes zu sorgen, ohne einen Ölaustritt befürchten zu müssen. Zu diesem Zweck ist die Hilfswelle 10 mit einer axialen Sackbohrung 18 versehen, die in einen mit dem Luftfilter verbundenen Belüftungskanal 19 mündet. Von dieser Sackbohrung 18 geht eine durch das Gegengewicht 11 verlaufende Querbohrung 20 aus, so daß durch diese Querbohrung zwar eine Belüftung des Zylinderkopfraumes 15 erzielt wird, Öl aus diesem Zylinderkopfraum 15 aber nicht gegen die Fliehkraft austreten kann.

## Patentansprüche

1. Kurbeltrieb für einen Verbrennungsmotor mit wenigstens einem Zylinder (1) mit einem Zylinderkopf sowie einem Kurbelgehäuse (6) mit einer Kurbelwelle (5) und mit einer zur Kurbelwelle (5) parallelen, gegengleich umlaufenden Ausgleichswelle (9), die wie die Kurbelwelle (5) Ausgleichsgewichte (8) für den Massenausgleich erster Ordnung trägt, wobei zum Ausgleich des sich bezüglich der Kurbelwelle (5) ergebenden Restmomentes der Ausgleichswelle (9) eine zusätzliche, zur Kurbelwelle (5) gleichlaufende, parallele Hilfswelle (10) mit einem Gegengewicht (11) vorgesehen ist, dadurch gekennzeichnet, daß die Kurbelwelle (5) den Ausgleich des gegengewichtes (11) bildet.

2. Kurbeltrieb nach Anspruch 1, dadurch gekennzeichnet, daß die Hilfswelle (10) auf dem Zylinderkopf (13), vorzugsweise in dem die Nockenwellen (15) aufnehmenden Zylinderkopfraum (14), gelagert und über den Nockenwellenantrieb antreibbar ist.

3. Kurbeltrieb nach Anspruch 1 oder 2, dadurch gekennzeichnet, daß die Kurbelwelle (5) zum Ausgleich des Gegengewichtes (11) der Hilfswelle (10) eine auf der Seite des Gegengewichtes (11) vorgesehene Aussparung (12) in ihren Ausgleichsgewichten (7) aufweist.

4. Kurbeltrieb nach Anspruch 2, dadurch gekennzeichnet, daß die Hilfswelle (10) eine axiale, außerhalb des Zylinderkopfraumes (14) mündende Sackbohrung (18) aufweist, von der vorzugsweise im Bereich des Gegengewichtes (11) wenigstens eine im Zylinderkopfraum (14) mündende Querbohrung (20) ausgeht.

## Claims

1. A crank drive for an internal combustion engine, with at least one cylinder (1), with a cylinder head and a crankcase (6) with a crankshaft (5) and with a balancer shaft (9) parallel to the crankshaft (5) and rotating in diametric opposition, said balancer shaft, like the crankshaft (5), carrying balancing weights (8) for first-order mass balancing, an additional parallel auxiliary shaft (10) running in synchronism with the crankshaft (5) being provided with a counterweight (11) to balance the residual torque of the balancer shaft (9) occurring with respect to the crankshaft (5), characterised in that the crankshaft (5) forms balancing of the counterweight (11).

2. A crank drive according to claim 1, characterised in that the auxiliary shaft (10) is mounted on the cylinder head (13), preferably in the cylinder head chamber (14) receiving the camshafts (15) and is adapted to be driven via the camshaft drive.

3. A crank drive according to claim 1 or 2, characterised in that for the purpose of balancing the counterweight (11) of the auxiliary shaft (10) the crankshaft (5) has in its balancing weights (7) a recess (12) provided on the side of the counterweight (11) .

4. A crank drive according to claim 2, characterised in that the auxiliary shaft (10) has an axial blind bore (18) which opens out outside the cylinder head chamber (14) and from which there radiates, preferably in the region of the counterweight (11), at least one transverse bore (20) opening into the cylinder head chamber (14).

## Revendications

1. Mécanisme d'embiellage pour un moteur à combustion interne comportant au moins un cylindre (1), avec une culasse ainsi qu'un carter de vilebrequin (6) comportant un vilebrequin (5) et avec un arbre d'équilibrage (9) tournant parallèlement au vilebrequin (5) et en sens inverse de celui-ci, arbre portant, comme le vilebrequin (5), des masses d'équilibrage (8) pour effectuer l'équilibrage de première ordre des masses, où, pour équilibrer le couple résiduel de l'arbre d'équilibrage (9), résultant vis-à-vis du vilebrequin (5), est prévu un arbre auxiliaire (10) supplémentaire, parallèle au vilebrequin (5) et tournant dans le même sens que lui, doté d'un contrepoids (11), caractérisé en ce que l'arbre de vilebrequin (5) constitue l'équilibrage du contrepoids (11).

2. Mécanisme d'embiellage selon la revendication 1, caractérisé en ce que l'arbre auxiliaire (10) est monté à rotation sur la culasse (13), de préférence dans l'espace de culasse (14) logeant les arbres à cames (15) et est susceptible d'être entraîné par l'intermédiaire de l'entraînement de l'arbre à cames.

3. Mécanisme d'embiellage selon la revendication 1 ou 2, caractérisé en ce que l'arbre de vilebrequin (5) présente un évidement (12), prévu du côté du contrepoids (11) et ménagé dans ses masses d'équilibrage (7), pour assurer l'équilibrage du contrepoids (11) de l'arbre auxiliaire (10).

4. Mécanisme d'embiellage selon la revendication 2, caractérisé en ce que l'arbre auxiliaire (10) présente un trou borgne (18) axial, débouchant à l'extérieur de l'espace de culasse (14), d'où part, de préférence dans la zone du contrepoids (11), au moins un perçage transversal (20) débouchant dans l'espace de culasse (14).
